# EUROPÄISCHE PATENTANMELDUNG

(11) **EP 0 685 173 A1**
(43) Veröffentlichungstag der Anmeldung: **06.12.1995**
(21) Anmeldenummer: 95108097.7
(22) Anmeldetag: 26.05.1995
(51) Int. Cl.: A23L 1/217, A23P 1/08, A23L 1/272

(54) **Thermisch nachbehandelte Kartoffelprodukte, wie Pommes frites, sowie Verfahren und Vorrichtung zu ihrer Herstellung**

(30) Priorität: 03.06.1994 DE 4419427
(71) Anmelder: Extroverta S. Vogel, D-65529 Waldems (DE); Pommes Frites Mann GmbH, D-46359 Bocholt (DE)
(72) Erfinder: Vogel, Werner K., D-65529 Waldems (DE); Steverding, Werner, D-46414 Rhede (DE)
(74) Vertreter: Knoblauch, Ulrich, Dr.-Ing., Patentanwälte Dr. Knoblauch

(57) **Zusammenfassung**

Thermisch nachbehandelte Kartoffelprodukte (2, 5, 8), wie Pommes frites, sind mit bunter, ebenfalls der Nachbehandlung ausgesetzter Farbe eingefärbt. Ein Verfahren zur Herstellung dieser Kartoffelprodukte sieht vor, daß aus Kartoffeln Zwischenprodukte erzeugt und diese einer thermischen Nachbehandlung unterworfen werden, wobei die Zwischenprodukte während einer vorgegebenen Färbezeit mit einer Färbeflüssigkeit in Berührung gebracht werden und mit den so aufgenommenen Farbstoffen die thermische Nachbehandlung durchlaufen. Eine Vorrichtung zur Herstellung dieser Kartoffelprodukte sieht vor, daß der Backvorrichtung eine Färbevorrichtung vorgeschaltet ist, in der die Zwischenprodukte mit einer Färbeflüssigkeit in Berührung bringbar sind. Auf diese Weise erhält man Kartoffelprodukte mit erhöhter Attraktivität.

## Beschreibung

Die Erfindung bezieht sich auf thermisch nachbehandelte Kartoffelprodukte, wie Pommes frites, auf ein Verfahren zur Herstellung dieser Kartoffelprodukte, bei dem aus Kartoffeln Zwischenprodukte erzeugt und diese einer thermischen Nachbehandlung unterworfen werden, sowie auf eine Vorrichtung zur Herstellung dieser Kartoffelprodukte, mit einem Vorbereitungsabschnitt zur Erzeugung von Zwischenprodukten, einer Backvorrichtung zur thermischen Nachbehandlung der Zwischenprodukte sowie einem Transportsystem.

Zur Herstellung von Pommes frites ist es bekannt, die Rohkartoffeln zu waschen, zu reinigen und anschließend zu schälen. Die Rohkartoffeln werden auf definierte Maße geschnitten (Stäbchenform), blanchiert und schließlich in einem Backofen fritiert. Der Fettgehalt wird über ein Abtropfband eingestellt. Die Ware wird entweder als gekühlte Frischware oder als schockgefrostete Tiefgefrierware abgepackt. Die so hergestellten Kartoffelprodukte sind im wesentlichen gelb oder gelbbraun. Als Beispiel hierfür wird auf DE 38 14 587 C2 verwiesen.

In ähnlicher Wiese können auch andere Kartoffelprodukte, wie Chips, Kroketten oder Puffer, hergestellt werden.

Aus CA 913 456 ist es bekannt, blattförmige mehrfarbige Kartoffelchips herzustellen, die an herbstlich gefärbte Blätter erinnern sollen. Die geschnittene Rohware wird in einer mit Friteuse Fett, dem eine Färbeflüssigkeit auf Wasserbasis zugemischt ist, nachbehandelt. Auf diese Weise ergibt sich eine fleckige Färbung auf dem Kartoffelprodukt. Die Färbung erfolgt daher während der Nachbehandlung.

Aus US 3 830 941 A ist es bekannt, Lebensmittel, wie Snacks, Popcorn, Cornchips oder Kartoffelchips mit einem Überzug zu versehen, der aus Öl, Wasser, hydrolysierten Getreidefeststoffen, einem emulsionsbildenden Mittel, Gewürzen, einer Lebensmittelfarbe und Protein besteht. Dieser Überzug ergibt ein glänzendes, leuchtendes Aussehen und verändert damit die Oberflächenstruktur des Produkts. Das Aufbringen des Überzugs ist die letzte Behandlungsstufe.

Der Erfindung liegt die Aufgabe zugrunde, Kartoffelprodukte der eingangs beschriebenen Art so zu gestalten, daß sie, insbesondere für Kinder, noch attraktiver sind.

Diese Aufgabe wird erfindungsgemäß dadurch gelöst, daß die Kartoffelprodukte mit bunter, ebenfalls der Nachbehandlung ausgesetzter Farbe eingefärbt sind.

Bunte Pommes frites und andere Kartoffelprodukte erwecken in hohem Maße die Aufmerksamkeit des Kunden. Sie sind insbesondere für Kinder ein sehr attraktives Nahrungsmittel. Entsprechend steigert sich der Verkaufswert. Darüber hinaus besteht die Möglichkeit, unterschiedlichen Farben unterschiedliche Geschmacksrichtungen, wie Würzarten, zuzuordnen. In technischer Hinsicht ist zu beachten, daß die Färbung bereits vor der Nachbehandlung erfolgt, so daß einerseits der Effekt der thermischen Nachbehandlung (Knusprigkeit) nicht durch eine nachträgliche Färbung beeinträchtigt wird und daß andererseits die Farbstoffe durch die thermische Nachbehandlung zumindest in gewissem Umfang fixiert werden.

Als Farbstoffe kommen alle natürlichen Farbstoffe und alle naturidentischen Farbstoffe (Lebensmittelfarben) in Betracht, welche bei der Nachbehandlungs-Temperatur beständig sind.

Vorzugsweise beschränkt sich die Einfärbung auf die Oberfläche und eine angrenzende Schicht. Hierbei kann es ausreichen, daß die Dicke der Schicht nur 0,1 bis 1,0 mm beträgt. Auf diese Weise kommt man mit einer geringen Farbstoffmenge aus, ohne daß hierdurch der optische Effekt verringert wird.

Besonders attraktiv ist es, daß die Kartoffelprodukte ein Set aus in verschiedenen Farben eingefärbten Kartoffelprodukten bilden. Hierbei können die eingefärbten Kartoffelprodukte insbesondere zusammen mit ungefärbten Kartoffelprodukten ein Set bilden. Die Sets können jeweils eine Verkaufseinheit darstellen. Der Kunde kann die Kartoffelprodukte als buntes Gemisch servieren. Kinder mögen darüber hinaus mit den Kartoffelprodukten ihrer Portion beim Essen spielen, sei es, daß sie die Kartoffelprodukte nach Farben ordnen oder aus ihnen Figuren legen.

Verfahrensmäßig besteht die Lösung der gestellten Aufgabe darin, daß die Zwischenprodukte während einer vorgegebenen Färbezeit mit einer Färbeflüssigkeit in Berührung gebracht werden und mit den so aufgenommenen Farbstoffen die thermische Nachbehandlung durchlaufen.

Während des Färbevorganges dringt die Färbeflüssigkeit von der Oberfläche her in das Kartoffelprodukt ein. Durch Festlegung der Färbezeit kann man die Eindringtiefe bestimmen. Insbesondere kann man auf diese Weise den gewünschten optischen Effekt mit einem Minimum an Farbstoff erreichen.

Als Färbeflüssigkeit empfiehlt sich die wässrige Lösung eines wasserlöslichen Farbstoffes. Da die Kartoffelprodukte wasserhaltig sind, wird eine solche Lösung besonders gut aufgenommen. Außerdem brauchen bei der thermischen Nachbehandlung keine Besonderheiten berücksichtigt zu werden.

Vorteilhaft ist es, daß die Nachbehandlung bei einer Temperatur von mindestens 100°C erfolgt und die Farbstoffe bei Nachbehandlungstemperatur weitgehend beständig sind. Beispielsweise handelt es sich um das Fritieren bei einer Temperatur von etwa 180°C. Farbstoffe, die bei dieser Temperatur beständig sind, werden durch die hohe Temperatur der Nachbehandlung in der Oberflächenzone des Zwischenprodukts fixiert.

Für das Aufbringen der Färbeflüssigkeit gibt es verschiedene vorteilhafte Möglichkeiten. Beispielsweise werden die Zwischenprodukte mit Färbeflüssigkeit besprüht oder überspült. Günstig ist es vielfach auch, wenn sie in ein Färbeflüssigkeitsbad eingetaucht werden.

Als günstig hat es sich erwiesen, daß die Zwischenprodukte während des Aufbringens der Färbeflüssigkeit zusätzlich zur Transportbewegung mechanisch bewegt werden. Durch die mechanische Bewegung werden alle Oberflächenbereiche mit Färbeflüssigkeit in Berührung gebracht. Außerdem wird die Färbeflüssigkeit derart bewegt, daß immer Flüssigkeitsteilmengen mit hoher Farbstoffkonzentration an die Oberfläche der Zwischenprodukte gelangen.

Die Färbezeit beträgt vorzugsweise 1 bis 10 Minuten. Der optimale Wert läßt sich leicht durch einige Versuche feststellen.

Von Vorteil ist es ferner, daß an der Oberfläche der Zwischenprodukte haftende Färbeflüssigkeit vor der thermischen Nachbehandlung zumindest teilweise entfernt wird. Die gefärbten Zwischenprodukte gelangen daher relativ trocken in die Nachbehandlungszone, so daß das bei hohen Nachbehandlungstemperaturen zum Kochen gebrachte Wasser nicht stört.

Beim einem bevorzugten Ausführungsbeispiel ist dafür gesorgt, daß die Zwischenprodukte in einem kontinuierlichen Strom zugeführt werden, der in mindestens zwei Teilströme aufgeteilt wird, daß wenigstens ein Teilstrom mit Färbeflüssigkeit in Berührung gebracht wird und daß die Teilströme nach dem Färben wieder vereinigt werden. Durch diese Maßnahme wird erreicht, daß mehrere Teilströme mit unterschiedlicher Färbung gleichzeitig erzeugt werden. Der durch die Vereinigung entstehende Strom enthält Zwischenprodukte unterschiedlicher Farben in einem genau vorgegebenen Mischungsverhältnis. Man kann daher mit einer üblichen Verpackungsstation Sets mit einem vorgegebenen Farb-Mischungsverhältnis verpacken.

Zweckmäßigerweise erfolgt die Aufteilung in Teilströme, nachdem die Zwischenprodukte blanchiert worden sind. Durch das Blanchieren wird die Oberfläche der Rohkartoffel teilweise geschlossen. Dies führt zwar zu einer Verlangsamung des Eindringens der Färbeflüssigkeit, sorgt aber andererseits dafür, daß die Farbstoffe besonders fest in der Oberfläche verankert werden.

Insbesondere sollte die Aufteilung in Teilströme erfolgen, nachdem die Zwischenprodukte getrocknet und etwa auf den gleichen Wassergehalt gebracht worden sind. Diese Vorbehandlung sorgt dafür, daß alle Zwischenprodukte sehr gleichmäßig eingefärbt werden.

Vorzugsweise sind die Teilströme wenigstens zu Beginn der thermischen Nachbehandlung noch getrennt. Es besteht daher keine Gefahr, daß unterschiedlich gefärbte Zwischenprodukte beim Aneinanderliegen den Farbstoff austauschen und dadurch eine Fehlfärbung erhalten. Vielmehr werden die Farbstoffe zunächst durch die thermische Nachbehandlung fixiert, ehe unterschiedlich gefärbte Zwischenprodukte miteinander in Berührung kommen.

Vorrichtungsmäßig wird die gestellte Aufgabe dadurch gelöst, daß der Backvorrichtung eine Färbevorrichtung vorgeschaltet ist, in der die Zwischenprodukte mit einer Färbeflüssigkeit in Berührung bringbar sind.

Die Färbevorrichtung kann demnach in eine übliche Fabrikationsstraße zur Herstellung von Kartoffelprodukten eingefügt werden. Es bereitet keine Schwierigkeiten, das Transportsystem auch der Färbevorrichtung zuzuordnen. Auf diese Weise können auch gefärbte Kartoffelprodukte kontinuierlich hergestellt werden.

Bei einer bevorzugten Ausführungsform weist die Färbevorrichtung Sprühdüsen zum Besprühen der Zwischenprodukte mit Färbeflüssigkeit auf. Bei einer ebenfalls günstigen Alternative weist die Färbevorrichtung ein Tauchbecken auf.

Als besonders empfehlenswert hat es sich herausgestellt, daß die Färbevorrichtung eine Rinne aufweist, in der die Zwischenprodukte mit Färbeflüssigkeit überspült werden. Hierbei dient die Färbeflüssigkeit gleichzeitig als Transportmittel. Außerdem werden die Zwischenprodukte intensiv bewegt.

Von Vorteil ist es ferner, daß die Neigung der Rinne änderbar ist. Auf diese Weise läßt sich die Geschwindigkeit der Zwischenprodukte bei der Bewegung durch die Rinne verändern.

Zweckmäßigerweise ist die Rinne Teil eines mit einer Pumpe versehenen Färbeflüssigkeitskreislaufs. Man kommt daher mit einer vergleichsweisen geringen Menge an Färbeflüssigkeit aus und erhält trotzdem eine intensive Einwirkung der Färbeflüssigkeit auf das Zwischenprodukt. Wenn die Pumpe regelbar ist, kann man darüber hinaus die Transportgeschwindigkeit und damit die Färbezeit beeinflussen.

Sehr günstig ist es, daß die Färbevorrichtung mit Mitteln zum Bewegen der Zwischenprodukte zusätzlich zur Transportbewegung versehen ist. Diese Zusatzbewegung führt dazu, daß alle Oberflächenbereiche der Zwischenprodukte immer wieder mit frischer Färbeflüssigkeit in Berührung kommen.

Mit Vorteil ist der Rinne eine Vibrationsvorrichtung zugeordnet. Sie erteilt den Zwischenprodukten die gewünschte Zusatzbewegung.

Vorzugsweise ist der Färbevorrichtung eine Abtropfvorrichtung nachgeschaltet. Statt dessen oder zusätzlich kann eine Abblasvorrichtung nachgeschaltet sein. Auf diese Weise wird die Färbeflüssigkeit von der Oberfläche der Zwischenprodukte entfernt. Diese Oberflächenflüssigkeit stört daher nicht bei der anschließenden thermischen Nachbehandlung.

Bei einer bevorzugten Ausführungsform gibt es einen Stromteiler, der den zulaufenden Strom der Zwischenprodukte auf mindestens zwei Pfade aufteilt, wobei mindestens einer der Pfade eine Färbevorrichtung aufweist. Mit dieser Vorrichtung werden gleichzeitig Kartoffelprodukte mit unterschiedlichen Farben in einem bestimmten Mischungsverhältnis erzeugt. An einer üblichen Verpackungsstation können daher Sets mit unterschiedlich gefärbten Kartoffelprodukten abgepackt werden.

Insbesondere führt wenigstens ein Pfad direkt zur Backvorrichtung. Die über diesen Pfad zugeführten Zwischenprodukte sind nicht gefärbt und ergeben daher die üblichen gelben oder gelb-braunen Kartoffelprodukte, während über die übrigen Pfade gefärbte Zwischenprodukte zugeführt werden.

Besonders günstig ist es, daß der Stromteiler im Anschluß an eine Trocknungs- und/oder Homogenisierungszone des Vorbereitungsabschnitts angeordnet ist. Auf diese Weise werden die Zwischenprodukte sehr gleichmäßig gefärbt.

Des weiteren empfiehlt es sich, daß die Pfade mindestens bis zur Eingangszone der Backvorrichtung getrennt geführt sind. Unterschiedlich gefärbte Zwischenprodukte kommen daher erst dann in Berührung, wenn sie zumindest kurzzeitig der hohen Nachbehandlungstemperatur ausgesetzt worden waren, so daß keine störenden Verfärbungen auftreten.

Insbesondere kann die Backvorrichtung als Mischvorrichtung für die Zwischenprodukte ausgelegt sein. Das bedeutet, daß die getrennt zugeführten Zwischenprodukte nach Eintritt in die Backvorrichtung gemischt werden, so daß sie bei der weiteren Verarbeitung und Verpackung in einem vorgegebenen Mischungsverhältnis der unterschiedlich gefärbten Kartoffelprodukte vorliegen.

Zu empfehlen ist es, daß der Stromteiler am Ende eines breiten Transportbandes angeordnet ist und ein querlaufendes Transportband, das den ersten Pfad bildet und vom Ende herabfallende Zwischenprodukte aufnimmt, sowie für jeden weiteren Pfad eine in dem Fallweg angeordnete Klappe und einen zugehörigen Auffangbehälter aufweist. Es genügt daher eine sehr einfache Konstruktion, um unterschiedlich zu behandelnde Zwischenprodukte in einem vorgegebenen Verhältnis aufzuteilen.

Die Erfindung wird nachstehend anhand eines in der Zeichnung dargestellten, bevorzugten Ausführungsbeispiels näher erläutert. Es zeigen:
- Fig. 1: schematisch ein Set aus verschiedenfarbigen Pommes-frites-Stäbchen,
- Fig. 2: einen Querschnitt durch ein eingefärbtes Pommes-frites-Stäbchen,
- Fig. 3: die aufeinanderfolgenden Funktionen bei der Herstellung der erfindungsgemäßen Kartoffelprodukte,
- Fig. 4: schematisch eine Draufsicht auf einen Teil einer Vorrichtung zur Herstellung der Erfindungsgemäßen Kartoffelprodukte,
- Fig. 5: schematisch eine Ansicht in Richtung der Pfeile A-A in Fig. 3 und
- Fig. 6: schematisch eine Ansicht in Richtung der Pfeile B-B in Fig. 3.

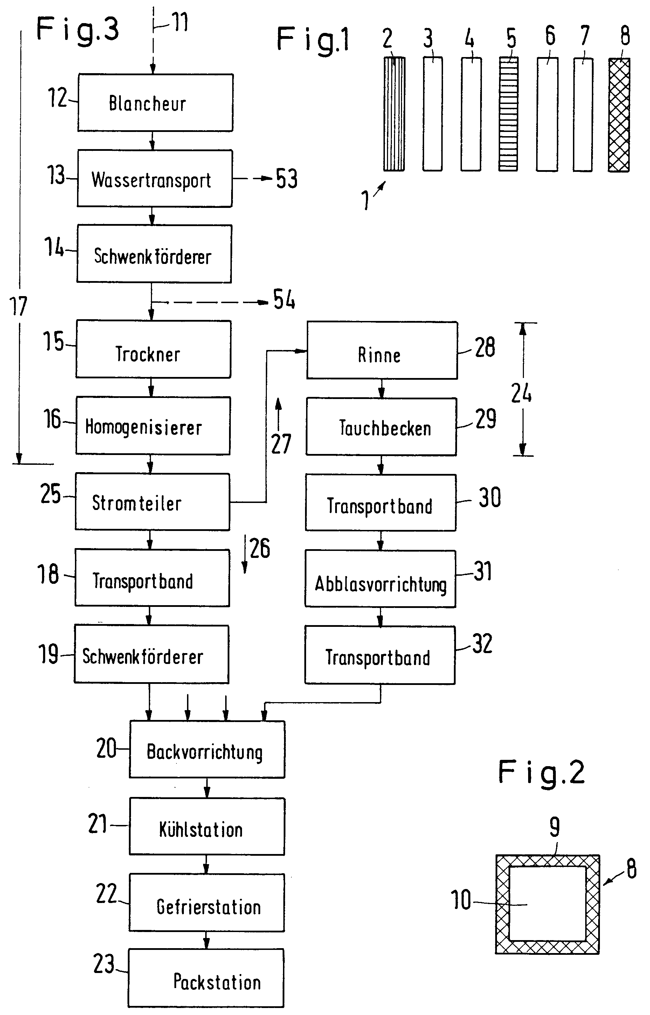

Fig. 1 zeigt schematisch ein Pommes-frites-Set 1 aus sieben Stäbchen 2 bis 8. Durch unterschiedliche Schraffuren ist angedeutet, daß die Stäbchen 2, 5 und 8 gefärbt sind, während die Stäbchen 3, 4, 6 und 7 ihre normale Farbe beibehalten haben. Beispielsweise ist das Stäbchen 2 rot, das Stäbchen 5 orange und das Stäbchen 8 blau eingefärbt.

Wie Fig. 2 zeigt, ist lediglich eine an der Oberfläche verlaufende Schicht 9 des Stäbchens 8 mit Farbstoff versehen. Der Innenquerschnitt 10 dagegen ist noch ungefärbt. Die Dicke der Schicht 9 liegt vorzugsweise zwischen 0,1 und 1 mm bei schockgefrostetem und tiefgekühltem Produkt, kann aber bei gekühlter Frischware, bei der der Farbstoff bis zum Verbrauch noch weiter eindringt, auch größer sein. In unmittelbarer Nähe der Oberfläche, die durch den Backvorgang verfestigt worden ist, sind die Farbstoffteilchen weitgehend fixiert.

Der Arbeitsablauf zur Herstellung solcher Kartoffelprodukte ergibt sich aus Fig. 3. Zunächst wird beschrieben, wie Pommes frites normalerweise kontinuierlich hergestellt werden. Die Rohkartoffeln werden gewaschen, gereinigt und geschält, sei es über Trommeln unter Zugabe von Korund oder über Heißdampf mittels Hochdruckwasserstrahl. Alsdann werden die Rohkartoffeln auf definierte Maße, also in Stäbchen, geschnitten, wobei die Kartoffeln unter Wasserdruck durch eine Schneidvorrichtung gepreßt werden. Die bis hierher beschriebenen Schritte sind in Fig. 3 nicht dargestellt. Das so hergestellte Zwischenprodukt 11, also hier die Stäbchen, werden zunächst in einem Blancheur 12 mit kochendem Wasser oder Dampf behandelt, um Enzyme zu zerstören, Mikroorganismen abzutöten und die Oberfläche zu verändern. Das Blanchieren kann beispielsweise während 4 Minuten bei 80° bis 85°C oder während 15 Minuten bei 65° bis 70°C erfolgen. Es folgt ein Wassertransport 13 in Wasser, dem 1,5 % natriumsaures Pyrophosphat zugesetzt worden ist, um eine Verfärbung wegen des Eisengehalts zu verhindern. Es genügt eine Aufenthaltszeit von 10 bis 12 Sekunden in diesem Wasser.

Es folgt ein Schwenkförderer 15, auf dem die Zwischenprodukte gleichmäßig über eine größere Breite des Förderers verteilt werden und eine Entwässerung durch Abtropfen erfolgt.

Es schließt sich ein Trockner an, auf dem die Zwischenprodukte 11 während einer längeren Zeit, beispielsweise 20 bis 30 Minuten, in heißer Luft von beispielsweise 65°C, getrocknet werden.

Ein Homogenisierer 16 dient dazu, einen Ausgleich des Wassergehalts in sämtlichen Zwischenprodukten 11 zu erzielen. Hierfür kann eine Zeit von beispielsweise 20 bis 30 Minuten angesetzt werden. Die bis hierher beschriebenen Teile werden in dieser Anmeldung als Vorbereitungsabschnitt 17 bezeichnet.

Bei der üblichen Herstellung von Pommes frites gelangen die homogenisierten Zwischenprodukte über ein Transportband 18 zu einem Schwenkförderer 19, der die Zwischenprodukte quer zur anschließenden Backvorrichtung 20 ausbreitet. Als Backvorrichtung dient eine Fett-Backstraße, insbesondere eine Friteuse, in der die Zwischenprodukte in Fett gebacken oder fritiert werden, was beispielsweise bei einer Temperatur von 180° bei einer Backzeit von wenigen Sekunden bis einigen Minuten erfolgt. Üblicherweise besitzt die Backvorrichtung am Ende eine Fettabtropfstrecke, mit der der Fettgehalt der fertigen Pommes frites bestimmt werden kann. Es schließt eine Kühlstation 21 an, in der eine Kühlung zunächst in der Außenluft und später in einem gekühlten Raum stattfindet. In der nachfolgenden Gefrierstation 22 werden die Kartoffelprodukte schockgefrostet und tiefgefroren. Schließlich werden sie in der Packstation 23 portionsweise verpackt. Für Frischware, die lediglich gekühlt und zum baldigen Verbrauch bestimmt ist, entfällt die Gefrierstation.

Diese an sich bekannte Pommes-frites-Fertigungsstraße wird erfindungsgemäß ergänzt durch eine Färbevorrichtung 24, welche der Backvorrichtung 20 vorgeschaltet ist. Zu diesem Zweck befindet sich zwischen dem Homogenisierer 16 und dem Transportband 18 ein Stromteiler 25, der die kontinuierlich zugeführten Zwischenprodukte 11 in zwei Teilströme 26 und 27 (oder mehr Teilströme) aufteilt. Der zu färbende Teilstrom wird in einer Rinne 28 mit nachgeschalteten Tauchbecken 29 mit einer Färbeflüssigkeit in Berührung gebracht und gelangt über ein Transportband 30, das dem Abtropfen dient, mit zugeordneter Abblasvorrichtung 31, beispielsweise einem Luftmesser 31, das mit einem scharfen Luftflachstrahl überschüssige Feuchtigkeit abstreift, und einem weiteren Transportband 32 zum Eingang der Backvorrichtung 20.

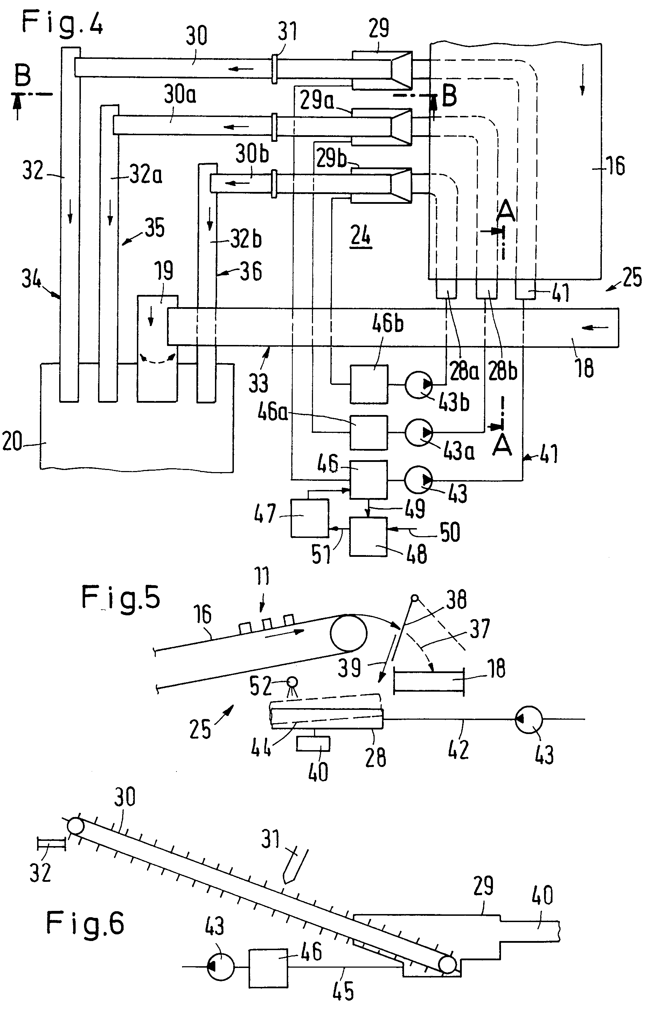

Einzelheiten sind in den Fig. 4 bis 6 veranschaulicht. Dort gibt es einen Pfad 33, der vom Stromteiler 25 direkt zur Backvorrichtung 26 führt. Dies entspricht dem Teilstrom 26 in Fig. 3. Drei weitere Pfade 34, 35 und 36 sind je mit einer Färbevorrichtung 24 versehen, die zwischen den Stromteiler 25 und die Backvorrichtung 20 geschaltet sind. Der Pfad 34 entspricht dem Teilstrom 27 der Fig. 3, die Pfade 35 und 36 den zusätzlich vorgesehenen Eingängen (ohne Bezugszeichen) der Backvorrichtung 20. Alle vier Pfade 33 bis 36 enden inmitten der Backvorrichtung 20, leiten also ihre Teilströme getrennt in das heiße Fett.

Der Stromteiler 25 ist am Ende des als Transportband ausgelegten Homogenisierers 16 vorgesehen. Dieser wirft die Zwischenprodukte 11 gemäß dem gestrichelten Teil 37 auf das Transportband 18 ab. Für jeden Pfad 34 bis 36 ist eine Klappe 38 vorgesehen, die aus der gestrichelten Stellung in die voll ausgezogene Stellung geschwenkt werden kann, in der die Zwischenprodukte gemäß dem Teil 39 abgelenkt werden. Sie gelangen in die Rinne 28, die durch eine Vibrationsvorrichtung 40 in Schwingbewegung versetzt werden kann. Entsprechendes gilt für die Rinnen 28a und 28b der Pfade 35 und 36.

Die Rinne 28 ist Teil eines Färbeflüssigkeits-Kreislaufs 41 und wird über eine Leitung 42 von einer Umwälzpumpe 43 mit Färbeflüssigkeit versorgt. Diese spült die Zwischenprodukte 11 längs der Rinne 28, was durch eine Schrägneigung (gestrichelte Stellung 44) der Rinne 28 und die Schwingungen der Vibrationsvorrichtung 40 noch unterstützt werden kann, in das Tauchbecken 29, das seinerseits über eine Leitung 45 mit einem Vorratsbehälter 46 für Färbeflüssigkeit verbunden ist. Aus ihm saugt die Umwälzpumpe 43 die Färbeflüssigkeit an. Das Transportband 30 entnimmt die inzwischen mit Färbeflüssigkeit versehenen Kartoffelprodukte aus dem Tauchbekken 29, läßt sie abtropfen, transportiert sie unter der Abblasvorrichtung 31 hindurch und legt sie auf dem Transportband 32 ab. Ein ähnlicher Aufbau ergibt sich für die Pfade 35 und 36, wo die entsprechenden Teile mit dem Zusatz a bzw. b versehen sind.

Der Vorratsbehälter 46, der auf einem vorgegebenen Füllstand gehalten wird, kann von einem Farbstoffbehälter 47 nachgefüllt werden. Zu diesem Zweck ist ein Regler 48 vorgesehen, der aus einem Istwert 49 der Farbmessung und einem Sollwert 50 ein entsprechendes Speisesignal 51 herleitet.

Als Färbeflüssigkeit dient insbesondere eine wässrige Lösung von wasserlöslichen Farbstoffen. Es handelt sich um Extrakte aus natürlichen Farben, wie Karotten, Paprika u.dgl., oder, was bevorzugt ist, um Lebensmittelfarben, die auch als naturidentische oder E-Farben bezeichnet werden. Als Beispiele seien genannt
E 110 - gelborange
E 120 - karmin
E 104 - chinlingelb
E 131 - patentblau
Es kommen auch andere Farbstoffe, z.B. öllösliche Farbstoffe in Betracht. Diese eignen sich aber mehr für fettfreie Backvorgänge als für das Fritieren.

Wenn der gesamte Strom der Zwischenprodukte 11 mit Hilfe des Homogenisierers 16 zum Stromteiler 25 gelangt, ergeben sich mehrere Teilströme längs der Pfade 33 bis 36. Auf drei Pfaden werden die Zwischenprodukte unterschiedlich eingefärbt. Die Färbezeit ist so bemessen, daß sich eine ausreichend dicke Oberflächenschicht eines jeden Stäbchens eingefärbt hat. Alle überflüssige Färbeflüssigkeit wird anschließend mit Hilfe von Lochbändern, Rüttelvorrichtungen, Luftmessern u.dgl. abgeschüttelt. Alsdann werden die unbehandelten Zwischenprodukte des Pfades 33 und die gefärbten Kartoffelprodukte der Pfade 34 bis 36 getrennt in die Backvorrichtung 20 eingeführt, wo sie nach erster Temperaturbehandlung miteinander gemischt werden. Diese Mischung hat eine durch den Stromteiler vorgegebene Zusammensetzung und bleibt auch bei der späteren Verarbeitung, insbesondere beim Verpacken, erhalten.

Selbstverständlich kommen auch andere Stromteiler in Betracht, beispielsweise solche, bei denen am Ende des Bandes des Homogenisierers 16 auf dem Band Leitwände vorgesehen sind, welche die Zwischenprodukte 11 zu unterschiedlichen Ausgängen leiten. Zum Aufbringen der Färbeflüssigkeit können auch Sprühdüsen 52 verwendet werden, die auf eine Förderstraße für die Zwischenprodukte gerichtet sind. Der Stromteiler 25 kann auch an einer anderen Stelle des Vorbereitungsabschnitts 17 vorgesehen sein, beispielsweise im Bereich des Wassertransports 13, wie der gestrichelte Pfeil 53 zeigt, oder nach dem Schwenkförderer 14, wie der gestrichelte Pfeil 54 zeigt. Man kann für Kartoffelprodukte einer jeden Farbe eine eigene Fertigungsstraße vorsehen, in dem der Stromteiler 25, das Transportband 18 und der Schwenkförderer 19 wegfallen, und der Homogenisierer 16 lediglich über die Färbevorrichtung 24 mit der Backvorrichtung 20 verbunden ist. Die so gewonnenen gefärbten Endprodukte werden dann einfarbig abgegeben oder nachträglich in einem gewünschten Mischungsverhältnis gemischt und dann verpackt.

Selbstverständlich können den gefärbten Kartoffelprodukten auch Gewürze, Geschmacksstoffe, Mineralstoffe oder Vitamine zugesetzt werden. Gegebenenfalls ist die Farbe gleichzeitig ein Kennzeichen für die spezielle Geschmacksrichtung des betreffenden Kartoffelprodukts.

## Patentansprüche

1. Thermisch nachbehandelte Kartoffelprodukte, wie Pommes frites, dadurch gekennzeichnet, daß sie mit bunter, ebenfalls der Nachbehandlung ausgesetzter Farbe eingefärbt sind.

2. Kartoffelprodukte nach Anspruch 1, dadurch gekennzeichnet, daß sie mit natürlichen Farbstoffen eingefärbt sind.

3. Kartoffelprodukte nach Anspruch 1, dadurch gekennzeichnet, daß sie mit naturidentischen Farbstoffen eingefärbt sind.

4. Kartoffelprodukte nach einem der Ansprüche 1 bis 3, dadurch gekennzeichnet, daß die Einfärbung sich auf die Oberfläche und eine angrenzende Schicht (9) beschränkt.

5. Kartoffelprodukte nach Anspruch 4, dadurch gekennzeichnet, daß die Dicke der Schicht 0,1 bis 1,0 mm beträgt.

6. Kartoffelprodukte nach einem der Ansprüche 1 bis 5, dadurch gekennzeichnet, daß sie ein Set (1) aus in verschiedenen Farben eingefärbten Kartoffelprodukten (2 bis 8) bilden.

7. Kartoffelprodukte nach einem der Ansprüche 1 bis 5, dadurch gekennzeichnet, daß sie zusammen mit ungefärbten Kartoffelprodukten (3, 4, 6, 7) ein Set (1) bilden.

8. Verfahren zur Herstellung von Kartoffelprodukten, wie Pommes frites, nach einem der Ansprüche 1 bis 7, bei dem aus Kartoffeln Zwischenprodukte erzeugt und diese einer thermischen Nachbehandlung unterworfen werden, dadurch gekennzeichnet, daß die Zwischenprodukte während einer vorgegebenen Färbezeit mit einer Färbeflüssigkeit in Berührung gebracht werden und mit den so aufgenommenen Farbstoffen die thermische Nachbehandlung durchlaufen.

9. Verfahren nach Anspruch 8, dadurch gekennzeichnet, daß als Färbeflüssigkeit die wässrige Lösung eines wasserlöslichen Farbstoffes verwendet wird.

10. Verfahren nach Anspruch 8 oder 9, dadurch gekennzeichnet, daß die Nachbehandlung bei einer Temperatur von mindestens 100°C erfolgt und die Farbstoffe bei Nachbehandlungstemperatur weitgehend beständig sind.

11. Verfahren nach einem der Ansprüche 8 bis 10, dadurch gekennzeichnet, daß die Zwischenprodukte mit Färbeflüssigkeit besprüht oder überspült werden.

12. Verfahren nach einem der Ansprüche 8 bis 11, dadurch gekennzeichnet, daß die Zwischenprodukte in ein Färbeflüssigkeitsbad eingetaucht werden.

13. Verfahren nach einem der Ansprüche 8 bis 12, dadurch gekennzeichnet, daß die Zwischenprodukte während des Aufbringens der Färbeflüssigkeit zusätzlich zur Transportbewegung mechanisch bewegt werden.

14. Verfahren nach einem der Ansprüche 8 bis 13, dadurch gekennzeichnet, daß die Färbezeit 1 bis 10 min beträgt.

15. Verfahren nach einem der Ansprüche 8 bis 14, dadurch gekennzeichnet, daß an der Oberfläche der Zwischenprodukte haftende Färbeflüssigkeit vor der thermischen Nachbehandlung zumindest teilweise entfernt wird.

16. Verfahren nach einem der Ansprüche 8 bis 15, dadurch gekennzeichnet, daß die Zwischenprodukte in einem kontinuierlichen Strom zugeführt werden, der in mindestens zwei Teilströme aufgeteilt wird, daß wenigstens ein Teilstrom mit Färbeflüssigkeit in Berührung gebracht wird und daß die Teilströme nach dem Färben wieder vereinigt werden.

17. Verfahren nach Anspruch 16, dadurch gekennzeichnet, daß die Aufteilung in Teilströme erfolgt, nachdem die Zwischenprodukte blanchiert worden sind.

18. Verfahren nach Anspruch 17, dadurch gekennzeichnet, daß die Aufteilung in Teilströme erfolgt, nachdem die Zwischenprodukte getrocknet und etwa auf den gleichen Wassergehalt gebracht worden sind.

19. Verfahren nach einem der Ansprüche 16 bis 18, dadurch gekennzeichnet, daß die Teilströme wenigstens zu Beginn der thermischen Nachbehandlung noch getrennt sind.

20. Vorrichtung zur Herstellung von Kartoffelprodukten, wie Pommes frites, nach einem der Ansprüche 1 bis 7 mit einem Vorbereitungsabschnitt zur Erzeugung von Zwischenprodukten, einer Backvorrichtung zur thermischen Nachbehandlung der Zwischenprodukte sowie einem Transportsystem, dadurch gekennzeichnet, daß der Backvorrichtung (20) eine Färbevorrichtung (24) vorgeschaltet ist, in der die Zwischenprodukte (11) mit einer Färbeflüssigkeit in Berührung bringbar sind.

21. Vorrichtung Anspruch 20, dadurch gekennzeichnet, daß die Färbevorrichtung (24) Sprühdüsen (53) zum Besprühen der Zwischenprodukte (11) mit Färbeflüssigkeit aufweist.

22. Vorrichtung nach Anspruch 20 oder 21, dadurch gekennzeichnet, daß die Färbeeinrichtung (24) ein Tauchbecken (29) aufweist.

23. Vorrichtung nach einem der Ansprüche 20 bis 22, dadurch gekennzeichnet, daß die Färbevorrichtung (24) eine Rinne (28) aufweist, in der die Zwischenprodukte (11) mit Färbeflüssigkeit überspült werden.

24. Vorrichtung nach Anspruch 23, dadurch gekennzeichnet, daß die Neigung der Rinne (28) änderbar ist.

25. Vorrichtung nach Anspruch 23 oder 24, dadurch gekennzeichnet, daß die Rinne (28) Teil eines mit einer Pumpe (43) versehenen Färbeflüssigkeitskreislaufes (41) ist.

26. Vorrichtung nach einem der Ansprüche 20 bis 25, dadurch gekennzeichnet, daß die Färbevorrichtung (24) mit Mitteln (40) zum Bewegen der Zwischenprodukte (11) zusätzlich zur Transportbewegung versehen ist.

27. Vorrichtung nach einem der Ansprüche 20 bis 26, dadurch gekennzeichnet, daß der Rinne (28) eine Vibrationsvorrichtung (40) zugeordnet ist.

28. Vorrichtung nach einem der Ansprüche 20 bis 27, dadurch gekennzeichnet, daß der Färbevorrichtung (24) eine Abtropfvorrichtung (30) nachgeschaltet ist.

29. Vorrichtung nach einem der Ansprüche 20 bis 28, dadurch gekennzeichnet, daß der Färbevorrichtung (24) eine Abblasvorrichtung (31) nachgeschaltet ist.

30. Vorrichtung nach einem der Ansprüche 20 bis 29, gekennzeichnet durch einen Stromteiler (25), der den zulaufenden Strom der Zwischenprodukte (11) auf mindestens zwei Pfade (33 bis 36) aufteilt, wobei mindestens einer der Pfade eine Färbevorrichtung (24) aufweist.

31. Vorrichtung nach Anspruch 30, dadurch gekennzeichnet, daß wenigstens ein Pfad (33) direkt zur Backvorrichtung (20) führt.

32. Vorrichtung nach Anspruch 30 oder 31, dadurch gekennzeichnet, daß der Stromteiler (25) im Anschluß an eine Trockungs- und/oder Homogenisierungszone (15, 16) des Vorbereitungsabschnitts (17) angeordnet ist.

33. Vorrichtung nach einem der Ansprüche 30 bis 32, dadurch gekennzeichnet, daß die Pfade (33 bis 36) mindestens bis zur Eingangszone der Backvorrichtung (20) getrennt geführt sind.

34. Vorrichtung nach einem der Ansprüche 30 bis 33, dadurch gekennzeichnet, daß die Backvorrichtung (20) als Mischvorrichtung für die Zwischenprodukte (11) ausgelegt ist.

35. Vorrichtung nach einem der Ansprüche 30 bis 34, dadurch gekennzeichnet, daß der Stromteiler (25) am Ende eines breiten Transportbandes angeordnet ist und ein querlaufendes Transportband (18), das den ersten Pfad (33) bildet und vom Ende herabfallende Zwischenprodukte (11) aufnimmt, sowie für jeden weiteren Pfad (34 bis 36) eine in dem Fallweg angeordnete Klappe (38) und einen zugehörigen Auffangbehälter (Rinne 40) aufweist.
